# EUROPEAN PATENT SPECIFICATION

(11) **EP 2 858 185 B1**
(45) Date of publication and mention of the grant of the patent: **26.06.2019**
(21) Application number: 13798187.4
(22) Date of filing: 27.05.2013
(51) Int. Cl.: H01T 21/02, F02P 13/00, F16J 15/08, H01T 13/08, C21D 8/00, C21D 9/40, C21D 1/26, C22F 1/08

(54) **GASKET AND PRODUCTION METHOD FOR SAME, AND SPARK PLUG AND PRODUCTION METHOD FOR SAME**
DICHTUNG UND HERSTELLUNGSVERFAHREN DAFÜR SOWIE ZÜNDKERZE UND HERSTELLUNGSVERFAHREN DAFÜR
JOINT D'ÉTANCHÉITÉ AINSI QUE SON PROCÉDÉ DE PRODUCTION, ET BOUGIE D'ALLUMAGE AINSI QUE SON PROCÉDÉ DE PRODUCTION

(30) Priority: 28.05.2012 JP 2012120367
(43) Date of publication of application: 08.04.2015
(73) Proprietor: NGK Spark Plug Co., Ltd., Nagoya-shi, Aichi 467-8525 (JP)
(72) Inventor: SUZUKI, Akira, Nagoya-shi Aichi 467-8525 (JP)
(74) Representative: Zimmermann & Partner Patentanwälte mbB
(86) International application number: PCT/JP2013/003344
(87) International publication number: WO 2013/179640

(56) References cited:
- EP-A1- 1 707 936
- JP-A- 2000 012 187
- JP-A- 2001 165 318
- JP-A- 2006 307 835
- JP-A- 2006 307 835
- JP-A- 2008 135 370
- US-B1- 6 502 833

## Description

### TECHNICAL FIELD

The present invention relates to a spark plug having the gasket and a method of manufacturing the spark plug.

### BACKGROUND ART

A spark plug is mounted to, for example, a combustion apparatus such as an internal combustion engine, and is used for igniting an air-fuel mixture in a combustion chamber. Generally, the spark plug includes an insulator having an axial hole; a center electrode inserted into a forward end portion of the axial hole; a metallic shell provided on the outer circumference of the insulator; and a ground electrode whose proximal end portion is joined to a forward end portion of the metallic shell and whose distal end portion forms a spark discharge gap in cooperation with the center electrode. Also, the metallic shell has an externally threaded portion for mounting the spark plug to the combustion apparatus, and a solid annular gasket may be attached to the screw neck of the externally threaded portion (refer to, for example, Patent Document 1) for ensuring airtightness between the metallic shell and the combustion apparatus. Generally, the solid annular gasket is manufactured by performing blanking on a flat plate of metal material. In order to implement good airtightness, preferably, the gasket has hardness of a predetermined value or less. Thus, hardness of a metal material is lowered to a predetermined value or less by, for example, annealing; then, blanking is performed on the metal material, thereby yielding a gasket.

Meanwhile, for example, if the spark plug is mounted to the combustion apparatus in such a positional relation that the ground electrode exists between a fuel injection device and the spark discharge gap, injected fuel hits against the back surface of the ground electrode. Accordingly, the existence of the ground electrode hinders the supply of an air-fuel mixture to the spark discharge gap and generates turbulence of the mixture flowing through the spark discharge gap, potentially resulting in deterioration in ignition performance. Thus, according to a conceivable practice, the position of the thread of the externally threaded portion in relation to the fixation position of the ground electrode on the forward end portion of the metallic shell is set to a position corresponding to, for example, the thread-cutting start position of an internally threaded portion of a mounting hole of the combustion apparatus. By this practice, when the spark plug is mounted to the combustion apparatus, the ground electrode is disposed at a fixed position in relation to a combustion chamber.

### PRIOR ART DOCUMENT

### PATENT DOCUMENT

Patent Document 1: Japanese Patent Application Laid-Open (*kokai*) No. 2008-135370
EP 1 707 936 A1 describes a spark plug having combustion pressure detecting function.
JP 2006 307835 A describes a spark plug having combustion pressure detecting function.
JP 2001 165318 A describes a manufacturing process of gasket shim.
US 6 502 833 B1 describes a metal c-shaped ring gasket.

### SUMMARY OF THE INVENTION

### PROBLEM TO BE SOLVED BY THE INVENTION

Incidentally, in the case of manufacture of the gasket by performing blanking on a metal material as mentioned above, blanking is accompanied by local work hardening on the gasket. Thus, the gasket may become nonuniform in hardness. Nonuniform hardness of the gasket may cause the following problem: even though the thread of the externally threaded portion is formed at a predetermined position in relation to a forward end portion of the metallic shell (ground electrode), and the spark plug is mounted to a combustion apparatus with a predetermined tightening torque, the forward end portion of the metallic shell (ground electrode) may fail to be disposed at a fixed position in relation to a combustion chamber. Also, blanking may cause warpage of an inner or outer circumferential portion of that face (forward end face) of the gasket which comes into contact with the combustion apparatus; accordingly, the contact area of the gasket with the combustion apparatus reduces, potentially resulting in a deterioration in airtightness.

The present invention has been conceived in view of the above circumstances, and an object of the invention is to provide a gasket which, when a spark plug is mounted to a combustion apparatus, allows accurate positioning of a forward end portion of a metallic shell (ground electrode) in relation to a combustion chamber and which can implement good airtightness, and a method of manufacturing the gasket, and to provide a spark plug having the gasket and a method of manufacturing the spark plug.

### MEANS FOR SOLVING THE PROBLEM

Configurations suitable for achieving the above object will next be described in itemized form. If needed, actions and effects peculiar to the configurations will be described additionally.

### Configuration 1.

The present configuration provides a method of manufacturing a spark plug according to claim 1. The method comprises manufacturing a solid annular gasket made of metal and provided on an outer circumference of a tubular metallic shell for a spark plug (hereinafter, referred to merely as the "metallic shell") between an externally threaded portion and a seat portion of the metallic shell, the metallic shell having the externally threaded portion formed on an outer circumference of a forward portion thereof and the seat portion located rearward of the externally threaded portion and protruding radially outward. The method further comprises:
a blanking step of performing blanking on a flat plate of a metal material so as to yield a ring member which is to become the gasket, wherein the metal material has a Vickers hardness of 70 Hv or more;
an annealing step of performing annealing on the ring member so as to lower a hardness of the ring member below that of the metal material, thereby yielding the gasket;
inserting a metallic shell through the gasket such that the gasket is disposed around a screw neck located between the externally threaded portion and the seat portion of the metal shell; and
pressing, under a predetermined load, using a jig having an annular protrusion, along an axial line, against the face of the gasket disposed toward the externally threaded portion, thereby forming a groove on the gasket, wherein an inside diameter of the gasket becomes smaller than a thread diameter of the externally threaded portion, such that the gasket is attached to the outer circumference of the screw neck; and
wherein a face of the gasket configured to be disposed toward the seat portion has an area of 83 mm2 or less.

According to configuration 1 mentioned above, a ring member yielded by blanking is annealed, thereby yielding the gasket. Blanking may cause nonuniform hardness of the ring member. However, after blanking, the ring member whose hardness may possibly be nonuniform is annealed. Therefore, annealing can reliably remove work strain from the ring member, whereby the ring member and, in turn, the gasket can have uniform hardness. As a result, when a spark plug is mounted to a combustion apparatus, a forward end portion of the metallic shell can be accurately positioned in relation to a combustion chamber, and, in turn, a ground electrode can be reliably disposed at a fixed position in relation to the combustion chamber.

Furthermore, since blanking is performed on a metal material which has a relatively high hardness before annealing, deformation of inner and outer circumferential portions of end faces of the ring member can be prevented, and, in turn, an inner circumferential portion and an outer circumferential portion of that face (forward end face) of the gasket which comes into contact with the combustion apparatus can be flat. Therefore, the forward end face of the gasket can be flat over a wide range, so that the gasket can have a sufficient contact area for contact with the combustion apparatus. Also, since annealing lowers hardness and renders hardness uniform, adhesion of the gasket to the combustion apparatus and the seat portion can be enhanced. As a result, excellent airtightness can be implemented.

As mentioned above, according to configuration 1, by performing annealing after blanking, both positioning accuracy and airtightness can be improved at the same time.

In the case where the gasket has nonuniform hardness, the smaller (e.g., 15 N·m or less) the tightening torque for mounting the spark plug to the combustion apparatus, the more likely the occurrence of adverse effect on airtightness. However, the employment of configuration 1 imparts uniform hardness to the gasket; thus, even at a small tightening torque, good airtightness can be implemented. In other words, configuration 1 is particularly useful in manufacturing a gasket to be mounted to a spark plug whose tightening torque is small, such as a spark plug whose thread diameter is M10 or less.

### Configuration 2.

A method of manufacturing a spark plug of the present configuration is characterized in that, in configuration 1, in the annealing step, the ring member is annealed such that a face of the gasket disposed toward the seat portion has a Vickers hardness of 150 Hv or less at any point thereon.

The "hardness of a gasket" means hardness measured on a portion of the gasket other than a portion whose hardness has changed as a result of working after the annealing step (e.g., in order to attach the gasket to the metallic shell, the gasket undergoes deformation work under pressure)(the same also applies in the following description). Also, "a face of the gasket disposed toward the seat portion" is selected for measurement of hardness at any point thereon for the following reason: the above-mentioned change of hardness as a result of working after the annealing step is unlikely to arise on the face of the gasket disposed toward the seat portion, so that the face is suitable for measuring the hardness of the gasket.

According to configuration 2 mentioned above, the gasket has a hardness of 150 Hv or less; thus, adhesion of the gasket to the combustion apparatus and the seat portion can be further enhanced. As a result, airtightness can be further improved.

### Configuration 3.

A method of manufacturing a spark plug of the present configuration is characterized in that, in configuration 1 or 2, in the annealing step, the ring member is annealed such that a face of the gasket disposed toward the seat portion has a Vickers hardness of 30 Hv or more at any point thereon.

According to configuration 3 mentioned above, the gasket has a hardness of 30 Hv or more. Thus, when the gasket has a high temperature, for example, in the course of use of the combustion apparatus, thermal deformation of the gasket can be effectively restrained, so that the loosening of the spark plug can be reliably prevented. As a result, airtightness can be further improved, and an accurately positioned condition (the position of the ground electrode (a forward end portion of the metallic shell) in relation to a combustion chamber) can be maintained over a long period of time.

The metal material has a Vickers hardness of 70 Hv or more.

According to any of the configurations 1 to 3 mentioned above, the metal material has a hardness of 70 Hv or more; thus, the ring member can be reduced in the amount of deformation stemming from blanking. Therefore, the forward end face of the gasket can be reliably flat over a wide range, so that the actions and effects mentioned above can be more reliably exhibited. In other words, the employment of configuration 4 can restrain deformation of the ring member stemming from blanking to such an extent that the forward end face of the gasket can be flat over a wide range.

### Configuration 4.

A method of manufacturing a spark plug of the present configuration is characterized in that, in any one of configurations 1 to 3, the gasket is formed of a metal which contains copper as a main component.

According to configuration 4 mentioned above, adhesion of the gasket to the combustion apparatus and the seat portion can be further improved, so that airtightness can be further enhanced.

Also, since copper has excellent thermal conductivity, heat of the metallic shell can be promptly conducted to the combustion apparatus through the gasket, so that the metallic shell and other component members of the spark plug (e.g., a ceramic insulator disposed in the inner circumference of the metallic shell) can be improved in thermal resistance.

### Configuration 5.

A method of manufacturing a spark plug of the present configuration is characterized in that, in configuration 4, in the annealing step, the ring member is annealed at a temperature of 150°C to 650°C.

According to configuration 5 mentioned above, since the annealing temperature is specified as 150°C or more, work strain can be effectively removed from the ring member, so that the gasket having uniform hardness can be yielded more reliably.

Also, since the annealing temperature is specified as 650°C or less, an excessive reduction in hardness of the gasket can be reliably prevented, so that the gasket which can implement excellent airtightness can be stably manufactured.

### Configuration 6.

A method of manufacturing a spark plug of the present configuration is characterized in that, in configuration 4 or 5, in the annealing step, the ring member is annealed at a temperature of 300°C to 650°C for a time of 30 minutes to 90 minutes.

According to configuration 6 mentioned above, work strain can be further effectively removed from the ring member, so that the hardness of the gasket can be uniform to a greater extent. As a result, airtightness can be further improved.

### Configuration 7.

A method of manufacturing a spark plug of the present configuration is characterized in that, in any one of configurations 1 to 3, the gasket is formed of a metal which contains iron as a main component.

According to configuration 7 mentioned above, adhesion of the gasket to the combustion apparatus and the seat portion can be further improved, so that airtightness can be further enhanced.

Also, as compared with copper, iron has higher hardness. Thus, the actions and effects of configurations 1 to 3 are more markedly exhibited, so that the gasket having excellent airtightness can be yielded.

### Configuration 8.

A spark plug of the present configuration is characterized by being yielded by a method of manufacturing according to any one of configurations 1 to 7.

Configuration 8 mentioned above yields actions and effects basically similar to those yielded by configurations 1 to 7.

The gasket of the present configuration is characterized in that the face disposed toward the seat portion has an area of 83 mm² or less.

In the case where the face disposed toward the seat portion has a sufficiently large area, the gasket has a sufficiently large contact area for contact with the combustion apparatus and the seat portion. Therefore, even though blanking causes nonuniform hardness of the gasket and warpage of the gasket, airtightness can be ensured to a certain extent. By contrast, in the case where the face disposed toward the seat portion has a small area, the contact area is greatly affected by nonuniform hardness and deformation stemming from blanking, so that a deterioration in airtightness is more likely to arise.

In the case where the face of the gasket disposed toward the seat portion has an area of 83 mm² or less as in configuration 10 mentioned above, a deterioration in airtightness stemming from blanking is of greater concern; however, through employment of configuration 1 to 9, good airtightness can be implemented. In other words, configurations 1 to 8 are particularly useful in manufacturing a gasket whose face disposed toward the seat portion has an area of 83 mm² or less.

A spark plug comprises a gasket yielded according to any one of configurations 1 to 7.

According to this configuration mentioned above, a forward end portion of the metallic shell (ground electrode) can be more reliably disposed at a fixed position in relation to the combustion chamber, and excellent airtightness can be implemented.

### BRIEF DESCRIPTION OF THE DRAWINGS

[FIG. 1] Partially cutaway front view showing the configuration of a spark plug.
[FIG. 2] Schematic view showing blanking performed on a metal material.
[FIG. 3] Perspective view showing a ring member.
[FIG. 4] Enlarged bottom view of a forward end portion of the spark plug for explaining a method of measuring an angle of deviation.
[FIG. 5] Fragmentary, enlarged sectional view of the ring member for explaining warpage formation regions of the ring member.
[FIG. 6] Graph showing the results of comparison between iron gaskets and copper gaskets.

### MODES FOR CARRYING OUT THE INVENTION

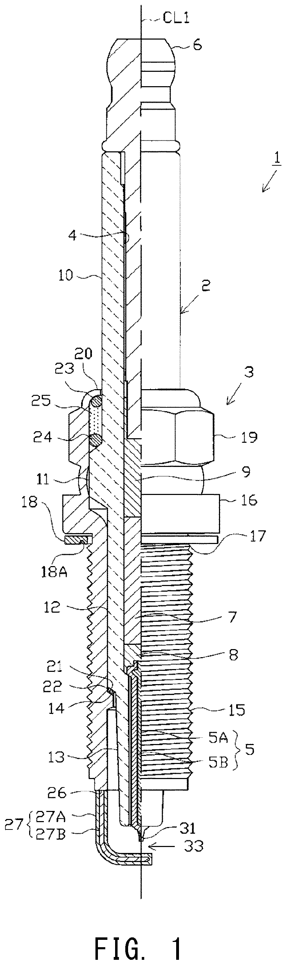

An embodiment of the present invention will next be described with reference to the drawings. FIG. 1 is a partially cutaway front view showing a spark plug 1. In the following description, the direction of an axial line CL1 of the spark plug 1 in FIG. 1 is referred to as the vertical direction, and the lower side of the spark plug 1 in FIG. 1 is referred to as the forward side of the spark plug 1, and the upper side as the rear side.

The spark plug 1 includes a tubular ceramic insulator 2 and a tubular metallic shell 3 for a spark plug (hereinafter, referred to merely as the "metallic shell") which holds the ceramic insulator 2 therein.

The ceramic insulator 2 is formed of alumina or the like by firing, as well known in the art. The ceramic insulator 2, as viewed externally, includes a rear trunk portion 10 formed on the rear side; a large-diameter portion 11 located forward of the rear trunk portion 10 and protruding radially outward; an intermediate trunk portion 12 located forward of the large-diameter portion 11 and being smaller in diameter than the large-diameter portion 11; and a leg portion 13 located forward of the intermediate trunk portion 12 and being smaller in diameter than the intermediate trunk portion 12. The large-diameter portion 11, the intermediate trunk portion 12, and most of the leg portion 13 of the ceramic insulator 2 are accommodated within the metallic shell 3. A stepped portion 14 which tapers forward is formed at a connection portion between the intermediate trunk portion 12 and the leg portion 13. The ceramic insulator 2 is seated on the metallic shell 3 at the stepped portion 14.

Furthermore, the ceramic insulator 2 has an axial hole 4 extending therethrough along the axial line CL1. A center electrode 5 is inserted into a forward end portion of the axial hole 4. The center electrode 5 includes an inner layer 5A formed of a metal having excellent thermal conductivity [e.g., copper, a copper alloy, or pure nickel (Ni)], and an outer layer 5B formed of a nickel alloy which contains Ni as a main component. The center electrode 5 assumes a rodlike (circular columnar) shape as a whole, and its forward end portion protrudes from the forward end of the ceramic insulator 2. Furthermore, a circular columnar noble metal tip 31 formed of a noble metal alloy (e.g., an iridium alloy or a platinum alloy) is provided on a forward end portion of the center electrode 5.

Also, a terminal electrode 6 is fixedly inserted into a rear end portion of the axial hole 4 and protrudes from the rear end of the ceramic insulator 2.

Furthermore, a circular columnar resistor 7 is disposed within the axial hole 4 between the center electrode 5 and the terminal electrode 6. The resistor 7 is electrically connected, at its opposite ends, to the center electrode 5 and the terminal electrode 6 via electrically conductive glass seal layers 8 and 9, respectively.

Additionally, the metallic shell 3 is formed into a tubular shape from a low-carbon steel or a like metal. The metallic shell 3 has an externally threaded portion 15 formed on the outer circumference of its forward portion and adapted to mount the spark plug 1 into a mounting hole of a combustion apparatus (e.g., an internal combustion engine or a fuel cell reformer). Also, the metallic shell 3 has a collar-like seat portion 16 located rearward of the externally threaded portion 15 and protruding radially outward. A ring-like gasket 18 is fitted to the outer circumference of a cylindrical screw neck 17 located between the externally threaded portion 15 and the seat portion 16. Furthermore, the metallic shell 3 has, near the rear end thereof, a tool engagement portion 19 having a hexagonal cross section and allowing a tool, such as a wrench, to be engaged therewith when the spark plug 1 is to be mounted to the combustion apparatus. Also, the metallic shell 3 has a crimped portion 20 provided at a rear end portion thereof for holding the ceramic insulator 2. In the present embodiment, the externally threaded portion 15 has a relatively small thread diameter (e.g., M10 or less).

Also, the metallic shell 3 has, on its inner circumferential surface, a tapered, stepped portion 21 adapted to allow the ceramic insulator 2 to be seated thereon. The ceramic insulator 2 is inserted forward into the metallic shell 3 from the rear end of the metallic shell 3. In a state in which the stepped portion 14 of the ceramic insulator 2 butts against the stepped portion 21 of the metallic shell 3, a rear-end opening portion of the metallic shell 3 is crimped radially inward; i.e., the crimped portion 20 is formed, whereby the ceramic insulator 2 is fixed to the metallic shell 3. An annular sheet packing 22 intervenes between the stepped portions 14 and 21. This retains airtightness of a combustion chamber and prevents outward leakage of fuel gas which enters a clearance exposed to a combustion chamber and formed between the leg portion 13 of the ceramic insulator 2 and the inner circumferential surface of the metallic shell 3.

Furthermore, in order to ensure seal which is established by crimping, annular ring members 23 and 24 intervene between the metallic shell 3 and the ceramic insulator 2 in a region near the rear end of the metallic shell 3, and a space between the ring members 23 and 24 is filled with a powder of talc 25. That is, the metallic shell 3 holds the ceramic insulator 2 through the sheet packing 22, the ring members 23 and 24, and the talc 25.

A proximal end portion of a rodlike ground electrode 27 is joined to a forward end portion 26 of the metallic shell 3. The ground electrode 27 is bent at its intermediate portion such that a side surface of a distal end portion thereof faces a forward end portion (tip 31) of the center electrode 5. The ground electrode 27 includes an outer layer 27A formed of an Ni alloy [e.g., INCONEL 600 or INCONEL 601 (registered trademark)], and an inner layer 27B formed of, for example, a copper alloy or pure copper, which is superior in thermal conductivity and electrical conductivity to the Ni alloy. Furthermore, a spark discharge gap 33 is formed between the forward end surface of the center electrode 5 (tip 31) and a distal end portion of the ground electrode 27. A spark discharge is performed across the spark discharge gap 33 substantially along the axial line CL1.

Next will be described the constitution of the gasket 18, which is a feature member of the present invention.

The gasket 18 assumes a solid annular form and is formed of a metal which contains copper having excellent thermal conductivity as a main component. The gasket 18 has an annular groove 18A formed, through deformation effected by application of pressure thereto, on its face located toward the externally threaded portion 15. As a result of formation of the groove 18A, the inside diameter of the gasket 18 becomes smaller than the thread diameter of the externally threaded portion 15, thereby preventing detachment of the gasket 18 from the metallic shell 3. The gasket 18 may be formed of a metal which contains metal other than copper (e.g., iron or Ni) as a main component. In the case where the gasket 18 is formed of a metal which contains iron as a main component, hot loosening resistance of the spark plug 1 can be improved, and manufacturing cost can be reduced.

Furthermore, the face of the gasket 18 disposed toward the seat portion 16 (i.e., the face which does not undergo pressing work for formation of the groove 18A) has a Vickers hardness of 30 Hv to 150 Hv at any point thereon. The hardness of the gasket 18 means hardness measured on a portion of the gasket 18 other than a portion whose hardness has changed as a result of working (in the present embodiment, pressing work) after the annealing step, which will be described later.

Furthermore, the face of the gasket 18 disposed toward the seat portion 16 has an area of 115 mm² or less. In view of airtightness, preferably, the area has a predetermined value (e.g., 35 mm²) or more.

Next, a method of manufacturing the spark plug 1 configured as mentioned above is described.

First, the metallic shell 3 is formed beforehand. Specifically, a circular columnar metal material (e.g., an iron-based material or a stainless steel material) is subjected to cold forging, etc., so as to form a general shape and a through hole. Subsequently, machining is conducted so as to adjust the outline, thereby yielding a metallic-shell intermediate.

Then, the straight-rodlike ground electrode 27 formed of an Ni alloy or a like metal is resistance-welded to the forward end surface of the metallic-shell intermediate. The resistance welding is accompanied by formation of so-called "sags." After the "sags" are removed, the externally threaded portion 15 is formed in a predetermined region of the metallic-shell intermediate by rolling. Thus, the metallic shell 3 to which the ground electrode 27 is welded is yielded.

In forming the externally threaded portion 15 by rolling, the position of cutting start or end of the externally threaded portion 15 in relation to the joined position of the ground electrode 27 is determined in relation to, for example, the cutting start position of an internal thread formed on a mounting hole wall of the combustion apparatus. That is, the externally threaded portion 15 is formed by rolling such that, when the externally threaded portion 15 of the spark plug 1 is threadingly engaged with the mounting hole of the combustion apparatus, the ground electrode 27 is disposed at a fixed position in relation to the combustion apparatus.

Next, the metallic shell 3 to which the ground electrode 27 is welded is subjected to galvanization or nickel plating. In order to enhance corrosion resistance, the plated surface may be further subjected to chromate treatment.

Separately from preparation of the metallic shell 3, the ceramic insulator 2 is formed. Specifically, for example, a forming material granular-substance is prepared by use of material powder which contains alumina in a predominant amount, a binder, etc. By use of the prepared forming material granular-substance, a tubular green compact is formed by rubber press forming. The thus-formed green compact is subjected to grinding for shaping. The shaped green compact is fired in a kiln, thereby yielding the ceramic insulator 2.

Also, separately from preparation of the metallic shell 3 and the ceramic insulator 2, the center electrode 5 is formed. Specifically, an Ni alloy in which a copper alloy or a like metal is disposed in a central region for improving heat radiation performance is subjected to forging, thereby yielding the center electrode 5. Next, the tip 31 formed of a noble metal alloy is joined to a forward end portion of the center electrode 5 by laser welding or the like.

Next, the ceramic insulator 2 and the center electrode 5 formed as mentioned above, the resistor 7, and the terminal electrode 6 are fixed in a sealed condition by means of the glass seal layers 8 and 9. The glass seal layers 8 and 9 are generally formed of a mixture of borosilicate glass and metal powder; the mixture is charged into the axial hole 4 of the ceramic insulator 2 in such a manner that the resistor 7 is sandwiched between the charged portions of the mixture; subsequently, while being pressed from the rear side by the terminal electrode 6, the charged mixture is baked through application of heat in a kiln. At this time, a glaze layer may be simultaneously formed on the surface of the rear trunk portion 10 of the ceramic insulator 2; alternatively, the glaze layer may be formed beforehand.

Subsequently, the thus-formed ceramic insulator 2 having the center electrode 5 and the terminal electrode 6, and the metallic shell 3 having the ground electrode 27 are fixed together. More specifically, in a state in which the ceramic insulator 2 is inserted through the metallic shell 3, a relatively thin-walled rear-end opening portion of the metallic shell 3 is crimped radially inward; i.e., the above-mentioned crimped portion 20 is formed, thereby fixing the ceramic insulator 2 and the metallic shell 3 together.

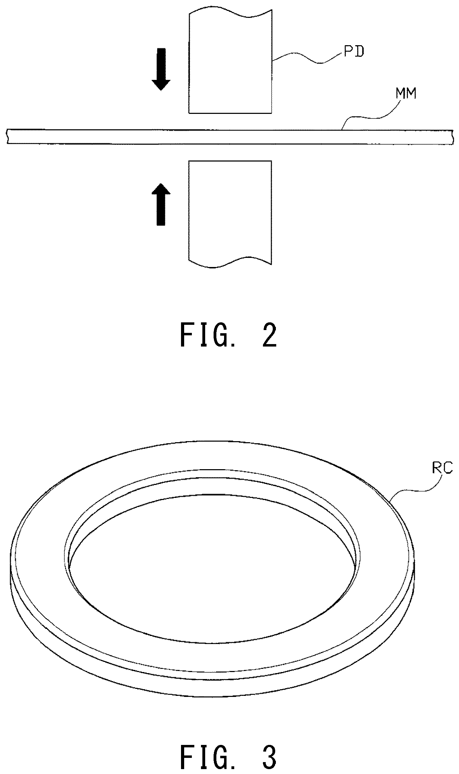

Separately from preparation of the metallic shell 3, etc., the gasket 18 is manufactured. First, as shown in FIG. 2, in the blanking step, by use of a predetermined pressing machine PD, blanking is performed on a flat plate of a metal material MM which contains copper as a main component. As a result, as shown in FIG. 3, a ring member RC which is to become the gasket 18 is yielded. In the present embodiment, the metal material MM has a Vickers hardness of 70 Hv or more. As a result of blanking, inner and outer circumferential portions of the end faces of the ring member RC are warped.

Next, in the annealing step, annealing is performed on the ring member RC to lower the hardness of the ring member RC below that of the metal material MM, thereby yielding the gasket 18. In the annealing step, the ring member RC is annealed such that at least the face of the gasket 18 disposed toward the seat portion 16 has a Vickers hardness of 30 Hv to 150 Hv at any point thereon. In the present embodiment, in order to more reliably impart the above-mentioned hardness to the gasket 18, the ring member RC is annealed at a temperature of 150°C to 650°C (more preferably, 300°C to 650°C) for a time of 30 minutes to 90 minutes.

Next, the metallic shell 3 is inserted through the gasket 18 such that the gasket 18 is disposed around the screw neck 17. Then, a predetermined jig having an annular protrusion (not shown) is pressed, along the axial line CL1, against the face of the gasket 18 disposed toward the externally threaded portion 15 under a predetermined load (e.g., about 1.1 tons to 1.8 tons). By this procedure, the groove 18A is formed on the gasket 18, and the inside diameter of the gasket 18 becomes smaller than the thread diameter of the externally threaded portion 15. As a result, the gasket 18 is attached to the outer circumference of the screw neck 17.

Finally, the ground electrode 27 is bent toward the center electrode 5, and the size of the spark discharge gap 33 between the center electrode 5 (tip 31) and the ground electrode 27 is adjusted. Thus, the spark plug 1 mentioned above is yielded.

As mentioned above in detail, according to the present embodiment, the ring member RC formed by blanking is annealed, thereby yielding the gasket 18. Thus, work strain can be reliably removed from the ring member RC, whereby the ring member RC and, in turn, the gasket 18 can have uniform hardness. As a result, when the spark plug 1 is mounted to the combustion apparatus, a forward end portion of the metallic shell 3 can be accurately positioned in relation to a combustion chamber, and, in turn, the ground electrode 27 can be reliably disposed at a fixed position in relation to the combustion chamber.

Furthermore, since blanking is performed on the metal material MM which has a relatively high hardness before annealing, deformation of inner and outer circumferential portions of end faces of the ring member RC can be prevented, and, in turn, an inner circumferential portion and an outer circumferential portion of that face (forward end face) of the gasket 18 which comes into contact with the combustion apparatus can be flat. Therefore, the forward end face of the gasket 18 can be flat over a wide range, so that the gasket 18 can have a sufficient contact area for contact with the combustion apparatus. Also, since annealing lowers hardness and renders hardness uniform, adhesion of the gasket 18 to the combustion apparatus and the seat portion 16 can be enhanced. As a result, excellent airtightness can be implemented.

As mentioned above, according to the present embodiment, by performing annealing after blanking, both positioning accuracy and airtightness can be improved at the same time. In the present embodiment, the face of the gasket 18 disposed toward the seat portion 16 is specified in area as 115 mm² or less (83 mm² or less); thus, a deterioration in airtightness is likely to arise; however, by performing annealing after blanking, even the gasket 18 having such an area can implement excellent airtightness.

Also, since the gasket 18 has a hardness of 150 Hv or less, adhesion of the gasket 18 to the combustion apparatus and the seat portion 16 can be further enhanced. As a result, airtightness can be further improved.

In this connection, since the gasket 18 has a hardness of 30 Hv or more, thermal deformation of the gasket 18 can be effectively restrained, so that the loosening of the spark plug 1 can be reliably prevented. As a result, airtightness can be further improved, and an accurately positioned condition (the position of the ground electrode 27 (a forward end portion of the metallic shell 3) in relation to a combustion chamber) can be maintained over a long period of time.

Additionally, since the metal material MM has a hardness of 70 Hv or more, the ring member RC can be reduced in the amount of deformation stemming from blanking. Therefore, the forward end face of the gasket 18 can be reliably flat over a wide range.

Furthermore, since the gasket 18 is formed of a metal which contains copper as a main component, adhesion of the gasket 18 to the combustion apparatus and the seat portion 16 can be further improved, so that airtightness can be further enhanced. Also, heat of the metallic shell 3 can be promptly conducted to the combustion apparatus through the gasket 18, so that the metallic shell 3, the ceramic insulator 2, etc., can be improved in thermal resistance.

Additionally, since the annealing temperature is specified as 150°C or more, work strain can be effectively removed from the ring member RC, so that the gasket 18 having uniform hardness can be yielded more reliably. Also, since the annealing temperature is specified as 650°C or less, an excessive reduction in hardness of the gasket 18 can be reliably prevented, so that the gasket 18 which can implement excellent airtightness can be stably manufactured.

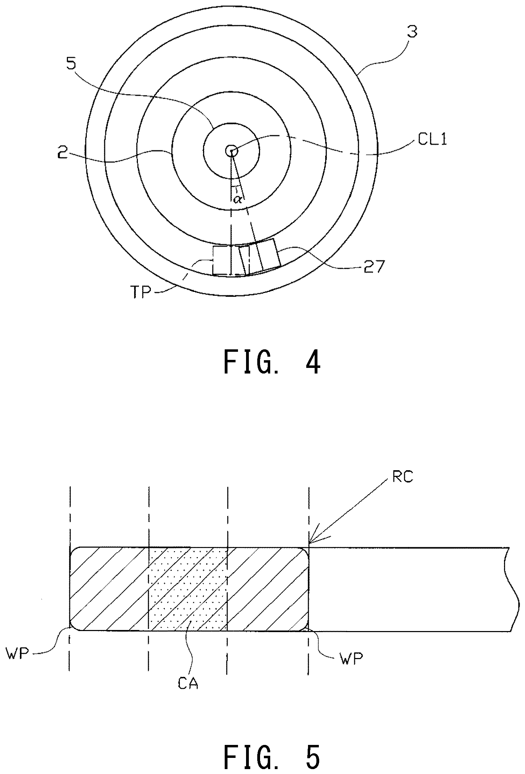

Next, in order to verify actions and effects to be yielded by the embodiment described above, 10 samples 1 (Example) of spark plugs and 10 samples 2 (Comparative Example) of spark plugs were manufactured. Sample 1 was of a spark plug having a gasket whose hardness was adjusted to a predetermined value (80 Hv in the present test) by annealing a ring member formed through blanking performed on a metal material. Sample 2 was of a spark plug having a gasket formed through blanking performed on a metal material whose hardness was adjusted to the predetermined value (80 Hv) by annealing. Samples 1 and 2 were subjected to a positioning accuracy evaluation test. The positioning accuracy evaluation test is outlined below. Each of the samples was mounted, with a tightening torque of 25 N·m, to a predetermined test bed of steel which simulated a combustion apparatus. Subsequently, the position of disposition of a ground electrode was identified. As shown in FIG. 4, there was measured the angle α (°) of deviation about the axial line CL1 of the position of disposition of the ground electrode 27 from a target mounting position TP. After measuring the angles α of deviation of the samples, there were calculated the average angle α of deviation of samples 1 and the average angle α of deviation of samples 2. Table 1 shows the results of the test.

**[Table 1]**

| | Sample 1 | Sample 2 |
|---|---|---|
| Average angle of deviation | 5° | 16° |

As shown in Table 1, sample 1 having the gasket whose hardness is adjusted to a predetermined value through annealing performed after blanking has excellent accuracy in positioning of the ground electrode as compared with sample 2 having the gasket formed by performing blanking on a metal material whose hardness is adjusted to the predetermined value. Conceivably, this is for the following reason: blanking is accompanied by work hardening, so that the gasket has nonuniform hardness; however, through annealing performed after blanking, the gasket has assumed uniform hardness.

Next, 20 samples 1 and 20 samples 2 were manufactured for each test hardness of gasket and then subjected to a first airtightness evaluation test. The first airtightness evaluation test is outlined below. The samples were attached, with a relatively small tightening torque (10 N·m), to respective bushes of aluminum which simulated a combustion apparatus. Subsequently, on the basis of the vibration test specified in ISO11565, vibration was applied to the samples for 30 minutes each in the horizontal and vertical directions (a total of one hour) at a sweep of 50 Hz to 500 Hz (one octave/min) and an acceleration of 30 G. After application of vibration, an air pressure of 1.5 MPa was applied to forward end portions of the samples, and there was measured a leakage rate of air from between the gaskets and the bushes and between the gaskets and the seat portions. The samples having a leakage rate of less than 20 cc/min were evaluated as acceptable. The number of acceptable samples 1 and the number of acceptable samples 2 were counted. Table 2 shows the results of the test. The hardness of the gaskets was 70 Hv, 90 Hv, 110 Hv, or 130 Hv. Samples 1 were changed in gasket hardness by adjusting annealing conditions, whereas samples 2 were changed in gasket hardness by changing the hardness of a metal material. The gaskets had an area of the face disposed toward the seat portion of 111 mm² and were formed of a metal which contained copper as a main component.

**[Table 2]**

| Hardness (Hv) | Number of accepted samples (pieces) | |
|---|---|---|
| | Sample 1 | Sample 2 |
| 70 | 20 | 9 |
| 90 | 20 | 8 |
| 110 | 20 | 8 |
| 130 | 20 | 7 |

As shown in Table 2, samples 1 have excellent airtightness. Conceivably, this is for the following reasons (1) and (2).
(1) As a result of annealing, the gaskets had uniform hardness, and adhesion of the gaskets to the combustion apparatus and to the respective seat portions was improved.
(2) Since blanking was performed on a metal material which had a relatively high hardness before annealing, deformation was able to be prevented with respect to inner and outer circumferential portions of the forward end faces of the gaskets (end faces of ring members), so that the forward end faces of the gaskets came into contact with the combustion apparatus over wide ranges thereof.

From the results of the above two tests, in manufacturing the gasket, preferably, annealing is performed after blanking in view of an improvement in accuracy in positioning a forward end portion of the metallic shell (ground electrode) and the implementation of excellent airtightness when the spark plug is mounted to the combustion apparatus.

Next, there were manufactured spark plug samples having gaskets which differed in hardness at any point on their faces disposed toward the seat portion as a result of adjustment of conditions (annealing time and annealing temperature) of annealing to be performed after blanking. The samples were subjected to a second airtightness test. The second airtightness test is outlined below. The samples were attached, with a tightening torque of 25 N·m, to respective bushes of aluminum which simulated a combustion apparatus. Subsequently, an air pressure of 1.5 MPa was applied to forward end portions of the samples, and there was measured a leakage rate of air from between the gaskets and the bushes and between the gaskets and the seat portions. The samples having a leakage rate of less than 10 cc/min were evaluated as acceptable. The number of acceptable samples was counted for individual hardness values. Table 3 shows the results of the test. The gaskets were formed of a metal (copper alloy) which contained copper as a main component, or a metal (soft iron) which contained iron as a main component. The samples had the same area of the gasket face disposed toward the seat portion.

**[Table 3]**

| Hardness (Hv) | Number of accepted samples (pieces) | |
|---|---|---|
| | Copper alloy | Soft iron |
| 130 | 20 | 20 |
| 140 | 20 | 20 |
| 150 | 20 | 20 |
| 160 | 16 | 15 |
| 170 | 15 | 14 |

As shown in Table 3, the samples exhibited excellent airtightness; particularly, the samples having a gasket hardness of 150 Hv or less exhibited quite excellent airtightness. Conceivably, this is for the following reason: adhesion of the gaskets to the combustion apparatus and to the respective seat portions was further enhanced.

From the results of the above test, in order to further improve airtightness, preferably, annealing is performed such that the gasket has a Vickers hardness of 150 Hv or less at any point on its face disposed toward the seat portion.

Next, there were manufactured 20 samples each of spark plugs which differed in hardness at any point on the face of the gasket disposed toward the seat portion through adjustment of conditions (annealing time and annealing temperature) of annealing to be performed after blanking. The samples were subjected to a loosening resistance evaluation test. The loosening resistance evaluation test is outlined below. The samples were attached, with a predetermined standard torque Ts (N·m), to respective bushes of aluminum. Subsequently, on the basis of the vibration test specified in ISO11565, vibration was applied two sets in an atmosphere of 200°C, wherein, in one set of application of vibration, vibration was applied to the samples for eight hours each in the horizontal and vertical directions (a total of 16 hours) at a sweep of 50 Hz to 500 Hz (one octave/min) and an acceleration of 30 G (i.e., vibration was applied to the samples for a total of 32 hours). After application of vibration, there was measured an untightening torque Te (N·m) for detaching the samples from the bushes of alumina. The ratio of the untightening torque Te to the standard torque Ts (Te/Ts) was calculated. Next, the samples having a Te/Ts of 30% or more were evaluated as acceptable. The number of acceptable samples was counted for individual hardness values. Table 4 shows the results of the test. In the samples, the gaskets were formed of a metal which contained copper as a main component, and had an area of the face disposed toward the seat portion of 111 mm².

**[Table 4]**

| Hardness (Hv) | Number of accepted samples (pieces) |
|---|---|
| 20 | 2 |
| 30 | 17 |
| 40 | 18 |
| 50 | 18 |
| 60 | 20 |

As shown in Table 4, the samples having a gasket hardness of 30 Hv or more have excellent loosening resistance. Conceivably, this is for the following reason: the thermal deformation of the gaskets at a high temperature was restrained.

From the results of the above test, preferably, annealing is performed such that the face of the gasket disposed toward the seat portion has a Vickers hardness of 30 Hv or more at any point thereon, in order to, by means of restraining loosening of the spark plug, ensure airtightness and restrain, over a long period of time, the positional deviation of a forward end portion of the metallic shell (ground electrode) of the spark plug stemming from use of the spark plug.

Next, blanking was performed on metal materials which differed in hardness so as to yield 100 ring members from each of the metal materials which differed in hardness. Next, as shown in FIG. 5, the sectional area of each ring member was divided into three areas along its width direction. Each of the ring members was checked to see if inner and outer circumferential warped portions WP formed as a result of blanking reached to a central area CA of the three areas. In the case where the warped portion WP reaches the central area CA, even though annealing is performed, the forward end face of the gasket may fail to become sufficiently flat, potentially resulting in a deterioration in airtightness. By contrast, in the case where the warped portion WP does not reach the central area CA, the forward end face of the gasket can be sufficiently flat over a wide range by performing blanking, so that good airtightness can be ensured. Thus, the samples in which the warped portion WP did not reach the central area CA were evaluated as acceptable. The number of accepted samples was counted for the individual metal materials. Table 5 shows the results of the test. The metal materials are of metals which contain copper as a main component.

**[Table 5]**

| Metal material hardness (Hv) | Number of accepted samples (pieces) |
|---|---|
| 50 | 8 |
| 60 | 10 |
| 70 | 92 |
| 80 | 95 |
| 90 | 98 |
| 100 | 100 |
| 110 | 100 |
| 120 | 100 |

As shown in Table 5, at a metal material hardness of 70 Hv or more, the warped portion is quite unlikely to reach the central area.

From the results of the above test, preferably, the metal material has a hardness of 70 Hv or more in order to render the forward end face of the gasket flat more reliably over a wider range, whereby good airtightness is more reliably implemented.

Next, there were manufactured the above-mentioned samples 1 [Example having the gasket whose hardness is adjusted to a predetermined value (90 Hv in the present test) by performing annealing after blanking] and samples 2 [Comparative Example having the gasket which is yielded by performing blanking on a metal material having a predetermined value of hardness (90 Hv)] which differed in the area of the face of the gasket disposed toward the seat portion (end face area). The samples were subjected to the above-mentioned first airtightness evaluation test. The number of accepted samples was compared between samples 1 and 2 which had the same end area, and the differential number of accepted samples was calculated. The differential number of accepted samples can be said to be the number of those samples which are manufactured by the conventional method and are initially evaluated as unacceptable, but subsequently become acceptable as a result of employment of the present invention. Therefore, the greater the differential number of accepted samples, the greater the effect of employment of the present invention. Table 6 shows the results of the test.

**[Table 6]**

| End face area (mm²) | Number of accepted samples (pieces) | | Differential number of accepted samples (pieces) |
|---|---|---|---|
| | Sample 1 | Sample 2 | |
| 140 | 20 | 13 | 7 |
| 130 | 20 | 13 | 7 |
| 120 | 20 | 12 | 8 |
| 115 | 20 | 8 | 12 |
| 111 | 20 | 8 | 12 |
| 101 | 20 | 7 | 13 |
| 92 | 20 | 8 | 12 |
| 83 | 20 | 3 | 17 |
| 75 | 20 | 3 | 17 |

As shown in Table 6, as compared with the case where the end face area is in excess of 115 mm², in the case where the end face area is 115 mm² or less, the differential number of accepted samples is significantly large, indicating that the effect of employment of the present invention is large. Conceivably, this is for the following reason: the smaller the end face area, the greater the influence of nonuniform hardness on airtightness, and the greater the percentage of the area of a warped portion formed by blanking to the area of the forward end face of the gasket; thus, the conventional method is likely to be accompanied by a deterioration in airtightness; however, the employment of the present invention more reliably prevents the occurrence of causes (nonuniform hardness, etc.) of a deterioration in airtightness.

Particularly, in the case of an end face area of 83 mm² or less, the differential number of accepted samples becomes far greater, indicating that the employment of the present invention is greatly effective.

From the results of the above test, the method of performing annealing after blanking for yielding the gasket is particularly effective for a spark plug in which the face of the gasket disposed toward the seat portion has an area of 115 mm² or less, so that a deterioration in airtightness would otherwise be particularly likely to arise.

Also, the method of performing annealing after blanking for yielding the gasket is quite effective for a spark plug in which the face of the gasket disposed toward the seat portion has an area of 83 mm² or less, so that a deterioration in airtightness would otherwise be significantly likely to arise.

Next, by use of the gaskets formed of a metal which is used to form the gasket 18 and contains iron as a main component, the first airtightness evaluation test mentioned above was conducted. Specifically, 20 samples 3 (Example) and 20 samples 4 (Comparative Example) were manufactured. Samples 3 were of spark plugs having respective gaskets whose hardness was adjusted to predetermined values by performing annealing on ring members yielded by performing blanking on a metal material. Samples 4 were of spark plugs having respective gaskets formed by performing blanking on metal materials whose hardness was adjusted to predetermined values by annealing. The samples were subjected to the first airtightness evaluation test.

The first airtightness evaluation test is outlined below. The samples were attached, with a relatively small tightening torque (10 N·m), to respective bushes of aluminum which simulated a combustion apparatus. Subsequently, on the basis of the vibration test specified in ISO11565, vibration was applied to the samples for 30 minutes each in the horizontal and vertical directions (a total of one hour) at a sweep of 50 Hz to 500 Hz (one octave/min) and an acceleration of 30 G. After application of vibration, an air pressure of 1.5 MPa was applied to forward end portions of the samples, and there was measured a leakage rate of air from between the gaskets and the bushes and between the gaskets and the seat portions. The samples having a leakage rate of less than 20 cc/min were evaluated as acceptable. The number of acceptable samples 3 and the number of acceptable samples 4 were counted. Table 7 shows the results of the test. The hardness of the gaskets was 70 Hv, 90 Hv, 110 Hv, or 130 Hv. Samples 3 were changed in gasket hardness by adjusting annealing conditions, whereas samples 4 were changed in gasket hardness by changing the hardness of a metal material. The gaskets had an area of the face disposed toward the seat portion of 111 mm² and were formed of a metal which contained iron as a main component.

**[Table 7]**

| Hardness (Hv) | Number of accepted samples (pieces) | |
|---|---|---|
| | Sample 3 | Sample 4 |
| 70 | 20 | 6 |
| 90 | 20 | 6 |
| 110 | 20 | 5 |
| 130 | 20 | 4 |

As shown in Table 7, samples 3 have excellent airtightness. Conceivably, similar to the case of the gaskets formed of a metal which contains copper as a main component, this is for the following reasons (1) and (2).
(1) As a result of annealing, the gaskets had uniform hardness, and adhesion of the gaskets to the combustion apparatus and to the respective seat portions was improved.
(2) Since blanking was performed on a metal material which had a relatively high hardness before annealing, deformation was able to be prevented with respect to inner and outer circumferential portions of the forward end faces of the gaskets (end faces of ring members), so that the forward end faces of the gaskets came into contact with the combustion apparatus over wide ranges thereof.

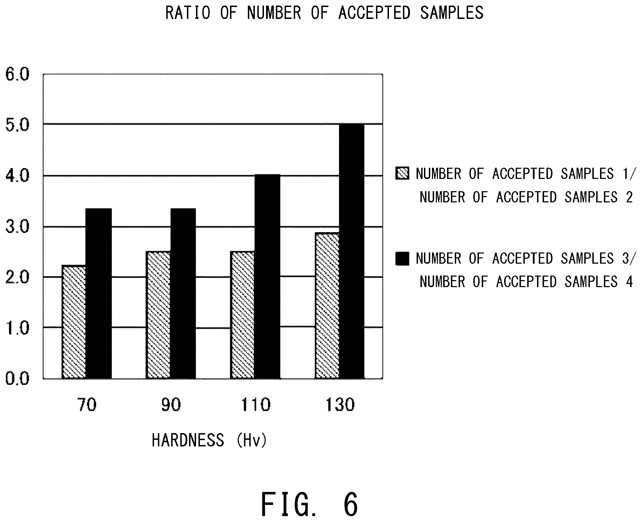

Meanwhile, an examination is conducted below on the results of the above-mentioned first airtightness evaluation test conducted on the gaskets formed of a metal which is used to form the gasket 18 and contains iron as a main component, and on the gaskets formed of a metal which is used to form the gasket 18 and contains copper as a main component. Table 8 and FIG. 6 show the ratio of the number of accepted samples 1 to the number of accepted samples 2 and the ratio of the number of accepted samples 3 to the number of accepted samples 4.

**[Table 8]**

| Hardness (Hv) | Ratio of number of accepted samples | |
|---|---|---|
| | Number of accepted samples 1/number of accepted samples 2 | Number of accepted samples 3/number of accepted samples 4 |
| 70 | 2.2 | 3.3 |
| 90 | 2.5 | 3.3 |
| 110 | 2.5 | 4.0 |
| 130 | 2.9 | 5.0 |

As shown in Table 8 and FIG. 6, the gaskets formed of a metal which is used to form the gasket 18 and contains iron as a main component (the ratio of the number of accepted samples 3 to the number of accepted samples 4) are higher in value than the gaskets formed of a metal which is used to form the gasket 18 and contains copper as a main component (the ratio of the number of accepted samples 1 to the number of accepted samples 2). This indicates that the present invention is more effective when applied to the case where a metal which contains iron as a main component is used to form the gasket 18.

The present invention is not limited to the above-described embodiment, but may be embodied, for example, as follows. Of course, applications and modifications other than those exemplified below are also possible.
(a) In the above embodiment, copper or iron is used to form the gasket 18; however, material for the gasket 18 is not limited thereto. For example, aluminum, zinc, or an alloy which contains at least aluminum or zinc may be used to form the gasket 18.
(b) In the above embodiment, the gasket 18 is used in the spark plug 1 which generates spark discharge across the spark discharge gap 33; however, a spark plug which can utilize the gasket 18 is not limited thereto. For example, the gasket 18 may be used in an ignition plug which has a circular columnar cavity (space) located at its forward end portion and defined by the forward end surface of a center electrode and an inner circumferential surface of an axial hole and which generates plasma in the cavity and discharges the plasma from an opening of the cavity (a so-called plasma jet ignition plug).
(c) In the above embodiment, the spark discharge gap 33 is formed between the tip 31 and the ground electrode 27. However, the following configuration may be employed: a tip is joined to a distal end portion of the ground electrode 27, and a spark discharge gap is formed between the tips provided on the two electrodes 5 and 27, respectively. Also, the following configuration may be employed: the tip 31 is not provided on the center electrode 5, and a spark discharge gap is formed between a forward end portion of the center electrode 5 and the ground electrode 27 or a tip joined to the ground electrode 27.
(d) In the above embodiment, the ground electrode 27 is joined to the forward end portion 26 of the metallic shell 3. However, the present invention is applicable to the case where a portion of a metallic shell (or, a portion of an end metal piece welded beforehand to the metallic shell) is formed into a ground electrode by machining (refer to, for example, Japanese Patent Application Laid-Open (*kokai*) No. 2006-236906).
(e) In the above embodiment, the tool engagement portion 19 has a hexagonal cross section. However, the shape of the tool engagement portion 19 is not limited thereto. For example, the tool engagement portion may have a Bi-HEX (modified dodecagonal) shape [ISO22977:2005(E)].
(f) In the above embodiment, the externally threaded portion 15 has a thread diameter of M10 or less. However, no particular limitation is imposed on the thread diameter of the externally threaded portion 15.

### DESCRIPTION OF REFERENCE NUMERALS

1: spark plug
3: metallic shell (metallic shell for spark plug)
15: externally threaded portion
16: seat portion
18: gasket
MM: metal material
RC: ring member

## Claims

1. A method of manufacturing a spark plug (1) comprising: manufacturing a solid annular gasket (18) made of metal and for providing on an outer circumference of a tubular metallic shell (3) for a spark plug between an externally threaded portion (15) and a seat portion (16) of the metallic shell (3), the metallic shell (3) having the externally threaded portion (15) formed on an outer circumference of a forward portion thereof and the seat portion (16) located rearward of the externally threaded portion (15) and protruding radially outward, the method comprises:
a blanking step of performing blanking on a flat plate of a metal material (MM) so as to yield a ring member (RC) which is to become the gasket (18), wherein the metal material (MM) has a Vickers hardness of 70 Hv or more;
an annealing step of performing annealing on the ring member (RC) so as to lower a hardness of the ring member (RC) below that of the metal material (MM), thereby yielding the gasket (18);
inserting a metallic shell (3) through the gasket (18) such that the gasket (18) is disposed around a screw neck (17) located between the externally threaded portion (15) and the seat portion (16) of the metal shell (3); and
pressing, under a predetermined load, using a jig having an annular protrusion, along an axial line (CL1), against the face of the gasket (18) disposed toward the externally threaded portion (15), thereby forming a groove (18A) on the gasket (18), wherein an inside diameter of the gasket (18) becomes smaller than a thread diameter of the externally threaded portion 15, such that the gasket (18) is attached to the outer circumference of the screw neck (17);
wherein a face of the gasket (18) configured to be disposed toward the seat portion (16) has an area of 83 mm² or less.

2. The method of manufacturing a spark plug (1) according to claim 1, wherein, in the annealing step, the ring member (RC) is annealed such that a face of the gasket (18) disposed toward the seat portion (16) has a Vickers hardness of 150 Hv or less at any point thereon.

3. The method of manufacturing a spark plug (1) according to claim 1 or 2, wherein, in the annealing step, the ring member (RC) is annealed such that a face of the gasket (18) disposed toward the seat portion (16) has a Vickers hardness of 30 Hv or more at any point thereon.

4. The method of manufacturing a spark plug (1) according to any one of claims 1 to 3, wherein the gasket (18) is formed of a metal which contains copper as a main component.

5. The method of manufacturing a spark plug (1) according to claim 4, wherein, in the annealing step, the ring member (RC) is annealed at a temperature of 150°C to 650°C.

6. The method of manufacturing a spark plug (1) according to claim 4 or 5, wherein, in the annealing step, the ring member (RC) is annealed at a temperature of 300°C to 650°C for a time of 30 minutes to 90 minutes.

7. The method of manufacturing a spark plug (1) according to any one of claims 1 to 3, wherein the gasket (18) is formed of a metal which contains iron as a main component.

8. A spark plug (1) manufactured according to any preceding claim.

## Patentansprüche

1. Verfahren zur Herstellung einer Zündkerze (1), aufweisend:
Herstellen einer festen ringförmigen aus Metall hergestellten Dichtung (18) zum Bereitstellen an einem Außenumfang einer röhrenförmigen Metallhülle (3) für eine Zündkerze zwischen einem Außengewindeabschnitt (15) und einem Sitzabschnitt (16) der Metallhülle (3), wobei die Metallhülle (3) den Außengewindeabschnitt (15), der sich auf einem Außenumfang eines vorderen Abschnitts davon befindet, und den Sitzabschnitt (16), der sich hinter dem Außengewindeabschnitt (15) befindet und radial nach außen hervorsteht, aufweist, wobei das Verfahren umfasst:
einen Stanzschritt des Durchführens von Stanzen an einer flachen Platte aus einem Metallmaterial (MM), um ein Ringelement (RC) hervorzubringen, das die Dichtung (18) werden soll, wobei das Metallmaterial (MM) eine Vickers-Härte von 70 Hv oder mehr aufweist;
einen Glühschritt des Durchführens von Glühen an dem Ringelement (RC), um eine Härte des Ringelements (RC) unter jene des Metallmaterials (MM) zu verringern, wodurch die Dichtung (18) gebildet wird;
Einführen einer Metallhülle (3) durch die Dichtung (18), so dass die Dichtung (18) um einen Gewindestutzen (17) herum angeordnet ist, der sich zwischen dem Außengewindeabschnitt (15) und dem Sitzabschnitt (16) der Metallhülle (3) befindet; und
Pressen, unter einer vorbestimmten Last, mithilfe einer Vorrichtung mit einem ringförmigen Überstand, entlang einer axialen Linie (CL1) gegen die Oberfläche der Dichtung (18), die in Richtung des Außengewindeabschnitts (15) angeordnet ist, wodurch eine Nut (18A) auf der Dichtung (18) gebildet wird, wobei ein Innendurchmesser der Dichtung (18) kleiner als ein Gewindedurchmesser des Außengewindeabschnitts (15) wird, so dass die Dichtung (18) an dem Außenumfang des Gewindestutzens (17) angebracht wird;
wobei eine Oberfläche der Dichtung (18), die ausgelegt ist, in Richtung des Sitzabschnitts (16) angeordnet zu sein, eine Fläche von 83 mm² oder weniger aufweist.

2. Verfahren zur Herstellung einer Zündkerze (1) nach Anspruch 1, wobei beim Glühschritt das Ringelement (RC) so geglüht wird, dass eine Oberfläche der Dichtung (18), die in Richtung des Sitzabschnitts (16) angeordnet ist, an einem beliebigen Punkt darauf eine Vickers-Härte von 150 Hv oder weniger aufweist.

3. Verfahren zur Herstellung einer Zündkerze (1) nach Anspruch 1 oder 2 wobei beim Glühschritt das Ringelement (RC) so geglüht wird, dass eine Oberfläche der Dichtung (18), die in Richtung des Sitzabschnitts (16) angeordnet ist, an einem beliebigen Punkt darauf eine Vickers-Härte von 30 Hv oder mehr aufweist.

4. Verfahren zur Herstellung einer Zündkerze (1) nach einem der Ansprüche 1 bis 3, wobei die Dichtung (18) aus einem Metall gebildet wird, das Kupfer als einen Hauptbestandteil enthält.

5. Verfahren zur Herstellung einer Zündkerze (1) nach Anspruch 4, wobei beim Glühschritt das Ringelement (RC) bei einer Temperatur von 150 °C bis 650 °C geglüht wird.

6. Verfahren zur Herstellung einer Zündkerze (1) nach Anspruch 4 oder 5, wobei beim Glühschritt das Ringelement (RC) für eine Zeit von 30 Minuten bis 90 Minuten bei einer Temperatur von 300 °C bis 650 °C geglüht wird.

7. Verfahren zur Herstellung einer Zündkerze (1) nach einem der Ansprüche 1 bis 3, wobei die Dichtung (18) aus einem Metall gebildet wird, das Eisen als einen Hauptbestandteil enthält.

8. Zündkerze (1), die nach einem der vorhergehenden Ansprüche hergestellt ist.

## Revendications

1. Procédé de fabrication d'une bougie d'allumage (1) comprenant : la fabrication d'un joint annulaire solide (18) constitué de métal et pour fourniture sur une circonférence externe d'une enveloppe métallique tubulaire (3) pour une bougie d'allumage entre une portion filetée en externe (15) et une portion d'assise (16) de l'enveloppe métallique (3), l'enveloppe métallique (3) présentant la portion filetée en externe (15) formée sur une circonférence externe d'une portion avant de celle-ci et la portion d'assise (16) disposée à l'arrière de la portion filetée en externe (15) et faisant radialement saillie vers l'extérieur, le procédé comprend :
une étape de découpage réalisant un découpage sur une plaque plane d'un matériau de métal (MM) afin de produire un élément d'anneau (RC) qui est destiné à devenir le joint (18), dans lequel le matériau de métal (MM) présente une dureté Vickers de 70 Hv ou supérieure ;
une étape de recuit réalisant un recuit sur l'élément d'anneau (RC) afin d'abaisser une dureté de l'élément d'anneau (RC) en dessous de celle du matériau de métal (MM), produisant par-là le joint (18) ;
l'insertion d'une enveloppe métallique (3) à travers le joint (18) de sorte que le joint (18) est disposé autour d'une collerette de vis (17) disposée entre la portion filetée en externe (15) et la portion d'assise (16) de l'enveloppe de métal (3) ; et
la pression, sous une charge prédéterminée, en utilisant un gabarit présentant une saillie annulaire, le long d'une ligne axiale (CL1), contre la face du joint (18) disposée vers la portion filetée en externe (15), formant par-là une rainure (18A) sur le joint (18), dans lequel un diamètre interne du joint (18) devient plus petit qu'un diamètre de filetage de la portion filetée en externe (15), de sorte que le joint (18) est fixé à la circonférence externe de la collerette de vis (17) ;
dans lequel une face du joint (18) configurée pour être disposée vers la portion d'assise (16) présente une surface de 83 mm² ou inférieure.

2. Procédé de fabrication d'une bougie d'allumage (1) selon la revendication 1, dans lequel dans l'étape de recuit, l'élément d'anneau (RC) est recuit de sorte qu'une face du joint (18) disposée vers la portion d'assise (16) présente une dureté Vickers de 150 Hv ou inférieure en un point quelconque de celle-ci.

3. Procédé de fabrication d'une bougie d'allumage (1) selon la revendication 1 ou 2, dans lequel, dans l'étape de recuit, l'élément d'anneau (RC) est recuit de sorte qu'une face du joint (18) disposée vers la portion d'assise (16) présente une dureté Vickers de 30 Hv ou supérieure en un point quelconque de celle-ci.

4. Procédé de fabrication d'une bougie d'allumage (1) selon l'une quelconque des revendications 1 à 3, dans lequel le joint (18) est constitué d'un métal qui contient du cuivre comme un constituant principal.

5. Procédé de fabrication d'une bougie d'allumage (1) selon la revendication 4, dans lequel, dans l'étape de recuit, l'élément d'anneau (RC) est recuit à une température de 150°C à 650°C.

6. Procédé de fabrication d'une bougie d'allumage (1) selon la revendication 4 ou 5, dans lequel, dans l'étape de recuit, l'élément d'anneau (RC) est recuit à une température de 300°C à 650°C pendant une durée de 30 minutes à 90 minutes.

7. Procédé de fabrication d'une bougie d'allumage (1) selon l'une quelconque des revendications 1 à 3, dans lequel le joint (18) est constitué d'un métal qui contient du fer comme un constituant principal.

8. Bougie d'allumage (1) fabriquée selon l'une quelconque des revendications précédentes.
